# EUROPEAN PATENT SPECIFICATION

(11) **EP 1 663 907 B1**
(45) Date of publication and mention of the grant of the patent: **10.01.2007**
(21) Application number: 04768545.8
(22) Date of filing: 17.09.2004
(51) Int. Cl.: C04B 30/02, F16L 59/02, C04B 35/80, C04B 35/10, C04B 35/106

(54) **MICROPOROUS THERMAL INSULATION MATERIAL**
MIKROPORÖSES WÄRME- ISOLIERENDES MATERIAL
MATERIAU THERMOISOLANT MICROPOREUX

(30) Priority: 02.10.2003 GB 0323054
(43) Date of publication of application: 07.06.2006
(73) Proprietor: Microtherm International Limited, Upton, Wirral CH49 1SX (GB)
(72) Inventor: MORTIMER, Mark Daniel, Chester Cheshire CH3 5QX (GB); CAWLEY, Andrew James, Flint Flintshire, Wales CH6 5RG (GB); MATTHEWS, Tony Michael, Kidderminster Worcestershire DY10 2YT (GB)
(74) Representative: Jackson, Derek Charles
(86) International application number: PCT/GB2004/003999
(87) International publication number: WO 2005/040063

(56) References cited:
- EP-A- 0 518 513
- WO-A-01/09057
- DE-C- 19 652 626
- GB-A- 1 434 738
- CHEMICAL ABSTRACTS + INDEXES, AMERICAN CHEMICAL SOCIETY. COLUMBUS, US, 8 April 1991 (1991-04-08), XP000318366 ISSN: 0009-2258
- DATABASE WPI Section Ch, Week 199732 Derwent Publications Ltd., London, GB; Class L02, AN 1997-349470 XP002305172 & SU 1 564 958 A1 (NONFERR METAL REFRACTORIES HEAT TECHN) 20 December 1996 (1996-12-20)

## Description

This invention relates to a microporous thermal insulation material.

Microporous thermal insulation is described, for example, in US-A-2 808 338 as comprising a reinforcing skeleton of fine staple reinforcing filaments which may be either organic or inorganic, a substantial amount, and preferably at least 45 per cent by weight, of a particulate filler material having a porous or fibrillate structure such as silica aerogel and, preferably, a substantial amount of finely divided opacifier materials. Suitable reinforcing filaments are said to include various types of asbestos filaments of reinforcing grade, cleaned mineral filaments, fine diameter glass filaments, preferably pre-treated, as with acid, to roughen the surface or otherwise to improve the surface adhesion characteristics, and organic filaments.

Although the use of microporous thermal insulation material containing a mixture of metal oxide, opacifier and reinforcement filaments as such is known, the maximum temperature of use of such microporous thermal insulation material is limited to substantially 1100 degrees Celsius due to excessive shrinkage of the insulation material, for example in excess of 3.5 per cent of the dimensions corresponding in use to width and length and in excess of 15 per cent in thickness, after heating in full soak conditions, at temperatures higher than 1100 degrees Celsius for 24 hours.

Shrinkage in the thickness dimension of a microporous thermal insulation material can be accepted as being higher than that in the dimensions corresponding in use to width and length due to the fact that even if the thickness of a layer of insulation covering a required area of a surface to be insulated shrinks at temperature, the layer of material remains covering the area between the heat source and the surface to be insulated from the heat source. It is only when excessive shrinkage occurs in the thickness of the layer of microporous thermal insulation material that the thickness becomes insufficient to adequately insulate the surface to be insulated.

However, a relatively small amount of shrinkage in the width and length of a layer of microporous thermal insulation material results in the area covered by the insulating layer of material decreasing. The decrease in the area covered results in regions being formed, at the edges of a layer of insulating material or between adjacent layers of insulating material, through which heat can be transmitted directly onto the surface to be insulated.

It is an object of the present invention to provide a microporous thermal insulation material which has a temperature of use of 1150 degrees Celsius or higher.

According to the present invention there is provided a microporous thermally insulating material comprising 40 to 75 per cent by weight aluminium oxide; a zirconium silicate opacifier; and filaments selected from calcium magnesium silicate filaments, polycrystalline alumina filaments, glass filaments and mixtures thereof, the glass filaments having a boron oxide content of less than 1 per cent by weight and a combined sodium oxide and potassium oxide content of less than 1 per cent by weight.

The aluminium oxide may be pyrogenic.

The thermally insulating material-may comprise:
40 to 75 per cent by weight of aluminium oxide,
17.5 to 60 per cent by weight of opacifier, and
0.5 to 20 per cent by weight of filament.

Preferably, the thermally insulating material may comprise:
40 to 70 per cent by weight of aluminium oxide,
25 to 50 per cent by weight of opacifier, and
1 to 10 per cent by weight of filament.

More preferably, the thermally insulating material may comprise:
50 to 60 per cent by weight of aluminium oxide,
25 to 50 per cent by weight of opacifier, and
1 to 10 per cent by weight of filament.

The glass filaments may have substantially the following composition:

| | |
|---|---|
| SiO₂ | 64 to 66 per cent by weight |
| Al₂O₃ | 23 to 26 per cent by weight |
| B₂O₃ | less than 0.1 per cent by weight |
| MgO | 9 to 11 per cent by weight |
| CaO | 0.1 to 0.3 per cent by weight |
| Na₂O & K₂O | less than 0.3 per cent by weight |
| Fe₂O₃ | less than 0.3 per cent by weight. |

Preferably the glass filaments may be S glass filaments.

The polycrystalline alumina filaments may have substantially the following composition:

| | |
|---|---|
| SiO₂ | 3 to 4 per cent by weight |
| Al₂O₃ | 95 to 96 per cent by weight |
| B₂O₃ | 0.01 to 0.06 per cent by weight |
| MgO | 0.01 to 0.03 per cent by weight |
| CaO | 0.02 to 0.04 per cent by weight |
| Na₂O & K₂O | 0.25 to 0.35 per cent by weight |
| Fe₂O₃ | 0.02 to 0.04 per cent by weight. |

The calcium magnesium silicate filaments may have substantially the following composition:

| | |
|---|---|
| SiO₂ | 50 to 70 per cent by weight |
| Al₂O₃ | 0.05 to 0.2 per cent by weight |
| B₂O₃ | less than 0.07 per cent by weight |
| MgO | 10 to 20 per cent by weight |
| CaO | 15 to 25 per cent by weight |
| Na₂O & K₂O | less than 0.06 per cent by weight |
| Fe₂O₃ | less than 0.1 per cent by weight. |

The thermally insulating material may optionally include amorphous silicon oxide, for example pyrogenic silicon oxide, preferably co-fumed with the aluminium oxide. The ratio by weight of the silicon oxide to the aluminium oxide may be in a range from 100 parts aluminium oxide to up to 50 parts silicon oxide. Preferably the ratio by weight of the silicon oxide to the aluminium oxide may be in a range from 100 parts aluminium oxide to 50 parts silicon oxide, to 100 parts aluminium oxide to 30 parts silicon oxide.

For a better understanding the present invention will be explained with reference to the following Examples.

### EXAMPLE 1 (COMPARATIVE)

A microporous thermal insulation material was made by mixing together in a blade-type mixer a mixture of 58.5 per cent by weight of pyrogenic silicon oxide available from Degussa under Trade Mark AEROSIL A200, 38.5 per cent by weight of a particulate opacifier in the form of zirconium silicate (otherwise known as zircon) available from Eggerding, and 3.0 per cent by weight of S glass filaments available from Owens Corning under the Trade Mark S-2 GLASS.

The silicon oxide had a nominal specific surface area of 200 m²/g as measured by the B.E.T. method. The zirconium silicate had a nominal maximum particle size of 9 micron.

The S glass filament had a nominal length of 6 mm and a nominal diameter of 9 micron and had substantially the following composition:

| | |
|---|---|
| SiO₂ | 64.41 per cent by weight |
| Al₂O₃ | 23.88 per cent by weight |
| B₂O₃ | 0.05 per cent by weight |
| MgO | 9.94 per cent by weight |
| CaO | 0.15 per cent by weight |
| Na₂O & K₂O | 0.12 per cent by weight |
| Fe₂O₃ | 0.05 per cent by weight |

together with incidental ingredients and impurities.

The materials were mixed together in order to obtain a homogeneous mixture.

The mixture was compacted into a set of cylindrical blocks each having a nominal diameter of 110 mm and a nominal thickness of 25 mm, the blocks having a nominal density of 320 kg/m³ and being inserted into a pre-heated furnace, heated at temperatures of 1100, 1150 and 1200 degrees Celsius for a period of 24 hours, then removed to allow the blocks to cool.

When the blocks had cooled, it was established that the block heated at 1100 degrees Celsius had shrunk by 5.44 per cent in the diametral direction and by 29.50 per cent in the thickness direction, the block heated at 1150 degrees Celsius had shrunk by 28.85 per cent in the diametral direction and by 47.10 per cent in the thickness direction, and the block heated at 1200 degrees Celsius had shrunk by 29.09 per cent in the diametral direction and by 51.70 per cent in the thickness direction.

Such an insulation material is not suitable for use as a thermal insulation material at a temperature of 1100 degrees Celsius or higher as the resultant shrinkage in the diametral direction is greater than 3.5 per cent and the resultant shrinkage in the thickness direction is greater than 15 per cent. It is believed this is due to the relatively high content of silicon oxide.

### EXAMPLE 2

A microporous thermal insulation material was made by mixing together in a blade-type mixer a mixture of 58.5 per cent by weight of pyrogenic aluminium oxide available from Degussa under the reference ALOX C, 38.5 per cent by weight of zirconium silicate and 3.0 per cent by weight of S glass filaments. The filaments and zirconium silicate were as described in Example 1.

The aluminium oxide had a nominal specific surface area of 100 m²/g as measured by the B.E.T. method.

The materials were mixed together in order to obtain a homogeneous mixture.

The mixture was compacted to a nominal density of 330 kg/m³ and tested as described in Example 1.

When the blocks had cooled, it was established that the block heated at 1100 degrees Celsius had shrunk by 0.91 per cent in the diametral direction and by 1.97 per cent in the thickness direction, the block heated at 1150 degrees Celsius had shrunk by 1.52 per cent in the diametral direction and by 5.93 per cent in the thickness direction, and the block heated at 1200 degrees Celsius had shrunk by 3.12 per cent in the diametral direction and by 14.62 per cent in the thickness direction.

Therefore, such a material is suitable for use as a thermal insulation material at a temperature of 1150 degrees Celsius and even up to 1200 degrees Celsius.

### EXAMPLE 3

A microporous thermal insulation material was made by mixing together in a blade-type mixer a mixture of 58.2 per cent by weight of pyrogenic aluminium oxide available from Degussa under the reference "ALU 3", the aluminium oxide having a nominal specific surface area of 130 m²/g as measured by the B.E.T. method, 38.8 per cent by weight of zirconium silicate and 3.0 per cent by weight of S glass filaments.

The zirconium silicate and glass filament materials were as described in Example 1.

The materials were mixed together in order to obtain a homogeneous mixture.

The mixture was compacted to a nominal density of 500 kg/m³ and tested at a temperature of 1100 degrees Celsius as described in Example 1.

When the block had cooled, it was established that the block had shrunk by 1.52 per cent in the diametral direction and by 2.80 per cent in the thickness direction. Extrapolation of the shrinkage data based on the data obtained in Example 2 shows that this material would have a shrinkage at 1150 degrees Celsius of less than 3.5 per cent in the diametral direction and less than 15 per cent in the thickness direction.

Therefore, such a material is suitable for use as a thermal insulation material at a temperature of 1150 degrees Celsius.

### EXAMPLE 4 (COMPARATIVE)

A series of microporous thermal insulation materials was made by mixing together in a blade-type mixer a mixture of 58.2 per cent by weight of pyrogenic aluminium oxide, 38.8 per cent by weight of a particulate opacifier material selected from titanium dioxide (known as rutile) and silicon carbide, and 3.0 per cent by weight of S glass filaments. The filaments were as described in Example 1, and the pyrogenic aluminium oxide was as described in Example 2.

The titanium dioxide had a nominal maximum particle size of 9 micron, and was obtained from Eggerding.

The silicon carbide was of a grade known as F1000 Green by a person skilled in the art, and was obtained from Washington Mills.

The materials were mixed together in order to obtain homogeneous mixtures.

The mixtures were compacted to a nominal density of 450 kg/m³ and tested at temperatures of 1100 and 1150 degrees Celsius as described in Example 1.

When the blocks had cooled, it was established that for the insulation material comprising the titanium dioxide, the block heated at 1100 degrees Celsius had shrunk by 2.07 per cent in the diametral direction and by 25.52 per cent in the thickness direction, and the block heated at 1150 degrees Celsius had shrunk by 2.49 per cent in the diametral direction and by 30.25 per cent in the thickness direction.

Such insulation material is not suitable for use at a temperature of 1100 degrees Celsius or higher as the resultant shrinkage in the thickness direction is greater than 15 per cent.

For the insulation material comprising the silicon carbide, the block heated at 1100 degrees Celsius had shrunk by 2.66 per cent in the diametral direction, and the block heated at 1150 degrees Celsius had shrunk by 4.16 per cent in the diametral direction. No measurements of thickness shrinkages were recorded for the insulation material comprising silicon carbide.

Such insulation material is not suitable for use at a temperature of 1150 degrees Celsius as the resultant shrinkage in the diametral direction is greater than 3.5 per cent.

It is believed that the excessive shrinkages occurring for these materials are due to the use of titanium dioxide and silicon carbide as the particulate opacifier materials.

### EXAMPLE 5

A microporous thermal insulation material was made by mixing together in a blade-type mixer a mixture of 60 per cent by weight of pyrogenic aluminium oxide, 33.3 per cent by weight of zirconium silicate and 6.7 per cent by weight of polycrystalline alumina filament available from Dyson Fibres Limited under the Trade Mark SAFFIL.

The pyrogenic aluminium oxide was as described in Example 2 and the zirconium silicate was as described in Example 1.

The polycrystalline alumina filaments had a nominal filament diameter of 5 micron and had substantially the following composition:

| | |
|---|---|
| SiO₂ | 3.94 per cent by weight |
| Al₂O₃ | 95.58 per cent by weight |
| B₂O₃ | 0.05 per cent by weight |
| MgO | 0.02 per cent by weight |
| CaO | 0.03 per cent by weight |
| Na₂O & K₂O | 0.29 per cent by weight |
| Fe₂O₃ | 0.03 per cent by weight |

together with incidental ingredients and impurities.

The materials were mixed together in order to obtain a homogeneous mixture.

The mixture was compacted to a nominal density of 370 kg/m³ and tested at temperatures of 1100 and 1200 degrees Celsius as described in Example 1.

When the blocks had cooled, it was established that the block heated at 1100 degrees Celsius had shrunk by 0.05 per cent in the diametral direction and by 2.10 per cent in the thickness direction, and the block heated at 1200 degrees Celsius had shrunk by 2.40 per cent in the diametral direction and by 13.70 per cent in the thickness direction.

Therefore, such a material is suitable for use as a thermal insulation material at a temperature of up to 1200 degrees Celsius.

### EXAMPLE 6

A microporous thermal insulation material was made using the components of Example 5 by mixing together in a blade-type mixer a mixture of 50.0 per cent by weight of pyrogenic aluminium oxide, 30.0 per cent by weight of zirconium silicate and 20.0 per cent by weight of polycrystalline alumina filament.

The materials were mixed together in order to obtain a homogeneous mixture.

The mixture was compacted to a nominal density of 450 kg/m³ and tested at a temperature of 1150 degrees Celsius as described in Example 1.

When the block had cooled, it was established that the block had shrunk by 0.34 per cent in the diametral direction and by 3.65 per cent in the thickness direction.

Therefore, such a material is suitable for use as a thermal insulation material at a temperature of at least 1150 degrees Celsius.

### EXAMPLE 7

A microporous thermal insulation material was made using the components of Example 5 by mixing together in a blade-type mixer a mixture of 57.1 per cent by weight of pyrogenic aluminium oxide, 38.1 per cent by weight of zirconium silicate and 4.8 per cent by weight of polycrystalline alumina filament.

The materials were mixed together in order to obtain a homogeneous mixture.

The mixture was compacted to a nominal density of 450 kg/m³ and tested at temperatures of 1100 and 1150 degrees Celsius as described in Example 1.

When the blocks had cooled, it was established that the block heated at 1100 degrees Celsius had shrunk by 0.28 per cent in the diametral direction and by 2.70 per cent in the thickness direction, and the block heated at 1150 degrees Celsius had shrunk by 0.67 per cent in the diametral direction and by 6.50 per cent in the thickness direction.

Therefore, such a material is suitable for use as a thermal insulation material at a temperature of at least 1150 degrees Celsius.

### EXAMPLE 8

A microporous thermal insulation material was made using the components of Example 5 by mixing together in a blade-type mixer a mixture of 75.0 per cent by weight of pyrogenic aluminium oxide, 17.5 per cent by weight of zirconium silicate and 7.5 per cent by weight of polycrystalline alumina filament.

The materials were mixed together in order to obtain a homogeneous mixture.

The mixture was compacted to a nominal density of 450 kg/m³ and tested at a temperature of 1150 degrees Celsius as described in Example 1.

When the block had cooled, it was established that the block had shrunk by 2.06 per cent in the diametral direction and by 14.32 per cent in the thickness direction.

Therefore, such a material is suitable for use as a thermal insulation material at a temperature of at least 1150 degrees Celsius.

### EXAMPLE 9

A microporous thermal insulation material was made using the components of Example 5 by mixing together in a blade-type mixer a mixture of 42.0 per cent by weight of pyrogenic aluminium oxide, 55.0 per cent by weight of zirconium silicate and 3.0 per cent by weight of polycrystalline alumina filament.

The materials were mixed together in order to obtain a homogeneous mixture.

The mixture was compacted to a nominal density of 450 kg/m³ and tested at a temperature of 1150 degrees Celsius as described in Example 1.

When the block had cooled, it was established that the block had shrunk by 0.64 per cent in the diametral direction and by 2.70 per cent in the thickness direction.

Therefore, such a material is suitable for use as a thermal insulation material at a temperature of at least 1150 degrees Celsius.

### EXAMPLE 10 (COMPARATIVE)

A microporous thermal insulation material was made by mixing together in a blade-type mixer a mixture of 57.1 per cent by weight of pyrogenic aluminium oxide, 38.1 per cent by weight of titanium dioxide and 4.8 per cent by weight of polycrystalline alumina filament.

The aluminium oxide was as described in Example 2, the titanium dioxide was as described in Example 4 and the polycrystalline alumina filament was as described in Example 5.

The materials were mixed together in order to obtain a homogeneous mixture.

The mixture was compacted to a nominal density of 450 kg/m³ and tested at 1150 degrees Celsius as described in Example 1.

When the block had cooled, it was established that the block had shrunk by 2.27 per cent in the diametral direction and by 28.00 per cent in the thickness direction.

Comparison of the results of Examples 5 to 10 shows that due to the use of titanium dioxide in the mixture, rather than zircon, the material described in Example 10 is not suitable for use as thermal insulation material at a temperature of 1150 degrees Celsius as the resultant shrinkage in the thickness direction is greater than 15 per cent.

### EXAMPLE 11 (COMPARATIVE)

A microporous thermal insulation material was made by mixing together in a blade-type mixer a mixture of 90.0 per cent by weight of pyrogenic aluminium oxide, 7.0 per cent by weight of zirconium silicate and 3.0 per cent by weight of polycrystalline alumina filament.

The aluminium oxide was as described in Example 2, the zirconium silicate was as described in Example 1 and the polycrystalline alumina filament was as described in Example 5.

The materials were mixed together in order to obtain a homogeneous mixture.

The mixture was compacted to a nominal density of 450 kg/m³ and tested at 1150 degrees Celsius as described in Example 1.

When the block had cooled, it was established that the block had shrunk by 4.30 per cent in the diametral direction and by 14.45 per cent in the thickness direction.

The material described in Example 11 is not suitable for use as a thermal insulation material at a temperature of 1150 degrees Celsius as the resultant shrinkage in the diametral direction is greater than 3.5 per cent. It is believed this is due to the relatively high amount of pyrogenic aluminium oxide and the relatively low amount of zirconium silicate present in the mixture, compared with the mixtures described in Examples 5 to 9.

### EXAMPLE 12 (COMPARATIVE)

A microporous thermal insulation material was made by mixing together in a blade-type mixer a mixture of 80.0 per cent by weight of pyrogenic aluminium oxide, 17.0 per cent by weight of zirconium silicate and 3.0 per cent by weight of polycrystalline alumina filament.

The aluminium oxide was as described in Example 2, the zirconium silicate was as described in Example 1 and the polycrystalline alumina filament was as described in Example 5.

The materials were mixed together in order to obtain a homogeneous mixture.

The mixture was compacted to a nominal density of 450 kg/m³ and tested at 1150 degrees Celsius as described in Example 1.

When the block had cooled, it was established that the block had shrunk by 3.72 per cent in the diametral direction and by 4.30 per cent in the thickness direction.

The material described in Example 12 is not suitable for use as a thermal insulation material at a temperature of 1150 degrees Celsius as the resultant shrinkage in the diametral direction is greater than 3.5 per cent. It is believed this is due to the relatively high amount of pyrogenic aluminium oxide and the relatively low amount of zirconium silicate present in the mixture, compared with the mixtures described in Examples 5 to 9.

### EXAMPLE 13

A microporous thermal insulation material was made by mixing together in a blade-type mixer a mixture of 60 per cent by weight of pyrogenic aluminium oxide, 33.3 per cent by weight of zirconium silicate and 6.7 per cent by weight of calcium magnesium silicate filament available from Thermal Ceramics under the Trade Mark SUPERWOOL MAX 607.

The aluminium oxide was as described in Example 2 and the zirconium silicate was as described in Example 1.

The calcium magnesium silicate filaments had a nominal filament diameter of 3 micron and had substantially the following composition:

| | |
|---|---|
| SiO₂ | 65.38 per cent by weight |
| Al₂O₃ | 0.10 per cent by weight |
| B₂O₃ | 0.06 per cent by weight |
| MgO | 14.66 per cent by weight |
| CaO | 19.68 per cent by weight |
| Na₂O & K₂O | 0.06 per cent by weight |
| Fe₂O₃ | 0.05 per cent by weight |

together with incidental ingredients and impurities.

The materials were mixed together in order to obtain a homogeneous mixture.

The mixture was compacted to a nominal density of 450 kg/m³ and tested at temperatures of 1100 and 1150 degrees Celsius as described in Example 1.

When the blocks had cooled, it was established that the block heated at 1100 degrees Celsius had shrunk by 1.13 per cent in the diametral direction and by 2.98 per cent in the thickness direction, and the block heated at 1150 degrees Celsius had shrunk by 2.76 per cent in the diametral direction and by 4.42 per cent in the thickness direction.

Therefore, such a material is suitable for use as a thermal insulation material at a temperature of at least 1150 degrees Celsius.

### EXAMPLE 14 (COMPARATIVE)

A microporous thermal insulation material was made by mixing together in a blade-type mixer a mixture of 60 per cent by weight of pyrogenic aluminium oxide, 33.3 per cent by weight of titanium dioxide and 6.7 per cent by weight of calcium magnesium silicate filament.

The aluminium oxide was as described in Example 2, the titanium dioxide was as described in Example 4 and the calcium magnesium silicate filament was as described in Example 13.

The materials were mixed together in order to obtain a homogeneous mixture.

The mixture was compacted to a nominal density of 450 kg/m³ and tested at a temperature of 1150 degrees Celsius as described in Example 1.

When the block had cooled, it was established that the block had shrunk by 12.49 per cent in the diametral direction and by 28.55 per cent in the thickness direction.

Such an insulation material is not suitable for use as a thermal insulation material at a temperature of 1150 degrees Celsius as the resultant shrinkage in the diametral direction is greater than 3.5 per cent and the resultant shrinkage in the thickness direction is greater than 15 per cent. It is believed this is due to the use of titanium dioxide.

### EXAMPLE 15

A microporous thermal insulation material was made by mixing together in a blade-type mixer a mixture of 40.0 per cent by weight of pyrogenic aluminium oxide (as described in Example 2), 4.0 per cent by weight pyrogenic silicon oxide (as described in Example 1), 53.0 per cent by weight of zirconium silicate and 3.0 per cent by weight of S glass filaments.

The zirconium silicate and filaments were as described in Example 1.

The materials were mixed together in order to obtain a homogeneous mixture. The mixed material comprised a physical mixture of aluminium oxide and silicon oxide substantially in a ratio by weight of 100 parts aluminium oxide to 10 parts silicon oxide.

The mixture was compacted to a nominal density of 450 kg/m³ and tested at a temperature of 1150 degrees Celsius as described in Example 1.

When the block had cooled, it was established that the block had shrunk by 2.41 per cent in the diametral direction and by 10.71 per cent in the thickness direction.

Such a material is suitable for use as a thermal insulation material at a temperature of 1150 degrees Celsius.

### EXAMPLE 16

A microporous thermal insulation material was made by mixing together in a blade-type mixer a mixture of 40.0 per cent by weight of pyrogenic aluminium oxide (as described in Example 2), 20.0 per cent by weight pyrogenic silicon oxide (as described in Example 1), 37.0 per cent by weight of zirconium silicate and 3.0 per cent by weight of S glass filaments.

The zirconium silicate and filaments were as described in Example 1.

The materials were mixed together in order to obtain a homogeneous mixture. The mixed material comprised a physical mixture of aluminium oxide and silicon oxide substantially in a ratio by weight of 100 parts aluminium oxide to 50 parts silicon oxide.

The mixture was compacted to a nominal density of 450 kg/m³ and tested at a temperature of 1150 degrees Celsius as described in Example 1.

When the block had cooled, it was established that the block had shrunk by 2.21 per cent in the diametral direction and by 10.28 per cent in the thickness direction.

Such a material is suitable for use as a thermal insulation material at a temperature of 1150 degrees Celsius.

### EXAMPLE 17

A microporous thermal insulation material was made by mixing together in a blade-type mixer a mixture of 58.5 per cent by weight of pyrogenic (or fumed) mixed oxide available from Degussa under the reference "pre-mullite", 38.5 per cent by weight of zirconium silicate and 3.0 per cent by weight of S glass filaments.

The zirconium silicate and filaments were as described in Example 1.

The pyrogenic mixed oxide was produced via a co-fuming method to form a chemical mixture of aluminium oxide and silicon oxide substantially in a ratio by weight of 100 parts aluminium oxide to 35 parts silicon oxide.

Therefore, the composition of the material was 15.2 per cent by weight silicon oxide, 43.3 per cent by weight aluminium oxide, 38.5 per cent by weight zirconium silicate, and 3.0 per cent by weight filaments.

The materials were mixed together in order to obtain a homogeneous mixture. The mixture was compacted to a nominal density of 320 kg/m³ and heated as described in Example 1.

When the blocks had cooled, it was established that the block heated at 1100 degrees Celsius had shrunk by 0.79 per cent in the diametral direction and by 3.80 per cent in the thickness direction, the block heated at 1150 degrees Celsius had shrunk by 3.29 per cent in the diametral direction and by 11.30 per cent in the thickness direction, and the block heated at 1200 degrees Celsius had shrunk by 4.24 per cent in the diametral direction and by 30.00 per cent in the thickness direction.

Such a material is suitable for use as a thermal insulation material at a temperature of 1150 degrees Celsius, but is not suitable for use at 1200 degrees Celsius.

### EXAMPLE 18 (COMPARATIVE)

A microporous thermal insulation material was made by mixing together in a blade-type mixer a mixture of 58.5 per cent by weight of pyrogenic (otherwise known as fumed) mixed oxide available from Degussa under the reference "F223", 38.5 per cent by weight of zirconium silicate and 3.0 per cent by weight of S glass filaments.

The zirconium silicate and filaments were as described in Example 1.

The pyrogenic mixed oxide was produced via a co-fuming method to form a chemical mixture of aluminium oxide and silicon oxide substantially in a ratio by weight of 19 parts aluminium oxide to 100 parts silicon oxide.

Therefore, the composition of the material was 49.2 per cent by weight silicon oxide, 9.3 per cent by weight aluminium oxide, 38.5 per cent by weight zirconium silicate, and 3.0 per cent by weight filaments.

The materials were mixed together in order to obtain a homogeneous mixture.

The mixture was compacted to a nominal density of 320 kg/m³ and heated as described in Example 1.

When the blocks had cooled, it was established that the block heated at 1100 degrees Celsius had shrunk by 7.91 per cent in the diametral direction and by 31.70 per cent in the thickness direction, the block heated at 1150 degrees Celsius had shrunk by 16.53 per cent in the diametral direction and by 40.90 per cent in the thickness direction, and the block heated at 1200 degrees Celsius had shrunk by 22.46 per cent in the diametral direction and by 53.30 per cent in the thickness direction.

The material described in Example 18 is not suitable for use as a thermal insulation material at a temperature of 1100 degrees Celsius or higher as the resultant shrinkage in the diametral direction is greater than 3.5 per cent and the resultant shrinkage in the thickness direction is greater than 15 per cent. It is believed this is due to the relatively low amount of aluminium oxide present in the mixture, compared with the mixtures described in Examples 15 to 17.

Although S glass filament is used, for example in Examples 2, 3, 15 and 16, other glass filaments can be used which have substantially the following composition:

| | |
|---|---|
| SiO₂ | 64 to 66 per cent by weight |
| Al₂O₃ | 23 to 26 per cent by weight |
| B₂O₃ | less than 0.1 per cent by weight |
| MgO | 9 to 11 per cent by weight |
| CaO | 0.1 to 0.3 per cent by weight |
| Na₂O & K₂O | less than 0.3 per cent by weight |
| Fe₂O₃ | less than 0.3 per cent by weight |

together with incidental ingredients and impurities.

The polycrystalline alumina filaments can have substantially the following composition:

| | |
|---|---|
| SiO₂ | 3 to 4 per cent by weight |
| Al₂O₃ | 95 to 96 per cent by weight |
| B₂O₃ | 0.01 to 0.06 per cent by weight |
| MgO | 0.01 to 0.03 per cent by weight |
| CaO | 0.02 to 0.04 per cent by weight |
| Na₂O & K₂O | 0.25 to 0.35 per cent by weight |
| Fe₂O₃ | 0.02 to 0.04 per cent by weight. |

The calcium magnesium silicate filaments can have substantially the following composition:

| | |
|---|---|
| SiO₂ | 50 to 70 per cent by weight |
| Al₂O₃ | 0.05 to 0.2 per cent by weight |
| B₂O₃ | less than 0.07 per cent by weight |
| MgO | 10 to 20 per cent by weight |
| CaO | 15 to 25 per cent by weight |
| Na₂O & K₂O | less than 0.06 per cent by weight |
| Fe₂O₃ | less than 0.1 per cent by weight. |

Microporous thermal insulation material in accordance with the present invention has been described in the Examples as having substantially a composition of:
40 to 75 per cent by weight of aluminium oxide,
17.5 to 60 per cent by weight of opacifier, and
3 to 20 per cent by weight of filament.

Microporous thermal insulation material in accordance with the present invention could have substantially a composition of:
40 to 75 per cent by weight of aluminium oxide,
17.5 to 60 per cent by weight of opacifier, and
0.5 to 20 per cent by weight of filament.

Alternatively, the microporous thermal insulation material could have substantially a composition of:
40 to 70 per cent by weight of aluminium oxide,
25 to 50 per cent by weight of opacifier, and
1 to 10 per cent by weight of filament.

Alternatively, the microporous thermal insulation material in accordance with the present invention has been described in the Examples as having substantially a composition of:
50 to 60 per cent by weight of aluminium oxide,
25 to 50 per cent by weight of opacifier, and
1 to 10 per cent by weight of filament.

The ratios by weight of aluminium oxide to silicon oxide in Examples 15 to 17 are described as substantially in a range from 100 parts aluminium oxide to up to 50 parts silicon oxide. Preferably the ratio by weight of the silicon oxide to the aluminium oxide may be in a range from 100 parts aluminium oxide to 50 parts silicon oxide, to 100 parts aluminium oxide to 30 parts silicon oxide.

## Claims

1. A microporous thermally insulating material **characterised by** comprising 40 to 75 per cent by weight aluminium oxide; a zirconium silicate opacifier; and filaments selected from calcium magnesium silicate filaments, polycrystalline alumina filaments, glass filaments and mixtures thereof, the glass filaments having a boron oxide content of less than 1 per cent by weight and a combined sodium oxide and potassium oxide content of less than 1 per cent by weight.

2. A material as claimed in claim 1, **characterised in that** the aluminium oxide is pyrogenic.

3. A material as claimed in claim 1 or 2, **characterised in that** the thermally insulating material comprises:
40 to 75 per cent by weight of aluminium oxide,
17.5 to 60 per cent by weight of opacifier, and
0.5 to 20 per cent by weight of filament.

4. A material as claimed in claim 3, **characterised in that** the thermally insulating material comprises:
40 to 70 per cent by weight of aluminium oxide,
25 to 50 per cent by weight of opacifier, and
1 to 10 per cent by weight of filament.

5. A material as claimed in claim 4, **characterised in that** the thermally insulating material comprises:
50 to 60 per cent by weight of aluminium oxide,
25 to 50 per cent by weight of opacifier, and
1 to 10 per cent by weight of filament.

6. A material as claimed in any preceding claim, **characterised in that** the glass filaments have substantially the following composition:
| | |
|---|---|
| SiO₂ | 64 to 66 per cent by weight |
| Al₂O₃ | 23 to 26 per cent by weight |
| B₂O₃ | less than 0.1 per cent by weight |
| MgO | 9 to 11 per cent by weight |
| CaO | 0.1 to 0.3 per cent by weight |
| Na₂O & K₂O | less than 0.3 per cent by weight |
| Fe₂O₃ | less than 0.3 per cent by weight. |

7. A material as claimed in claim 6, **characterised in that** the glass filaments are S glass filaments.

8. A material as claimed in any preceding claim, **characterised in that** the polycrystalline alumina filaments have substantially the following composition:
| | |
|---|---|
| SiO₂ | 3 to 4 per cent by weight |
| Al₂O₃ | 95 to 96 per cent by weight |
| B₂O₃ | 0.01 to 0.06 per cent by weight |
| MgO | 0.01 to 0.03 per cent by weight |
| CaO | 0.02 to 0.04 per cent by weight |
| Na₂O & K₂O | 0.25 to 0.35 per cent by weight |
| Fe₂O₃ | 0.02 to 0.04 per cent by weight. |

9. A material as claimed in any preceding claim, **characterised in that** the calcium magnesium silicate filaments have substantially the following composition:
| | |
|---|---|
| SiO₂ | 50 to 70 per cent by weight |
| Al₂O₃ | 0.05 to 0.2 per cent by weight |
| B₂O₃ | less than 0.07 per cent by weight |
| MgO | 10 to 20 per cent by weight |
| CaO | 15 to 25 per cent by weight |
| Na₂O & K₂O | less than 0.06 per cent by weight |
| Fe₂O₃ | less than 0.1 per cent by weight. |

10. A material as claimed in any preceding claim, **characterised in that** the thermally insulating material includes amorphous silicon oxide.

11. A material as claimed in claim 10, **characterised in that** the amorphous silicon oxide is pyrogenic silicon oxide.

12. A material as claimed in claim 10 or 11, **characterised in that** the amorphous silicon oxide is co-fumed with the aluminium oxide.

13. A material as claimed in any one of claims 10 to 12, **characterised in that** the ratio by weight of the silicon oxide to the aluminium oxide is in a range from 100 parts aluminium oxide to up to 50 parts silicon oxide.

14. A material as claimed in claim 13, **characterised in that** the ratio by weight of the silicon oxide to the aluminium oxide is in a range from 100 parts aluminium oxide to 50 parts silicon oxide, to 100 parts aluminium oxide to 30 parts silicon oxide.

## Patentansprüche

1. Mikroporöses thermisch isolierendes Material, **dadurch gekennzeichnet, dass** es Folgendes umfasst: 40 bis 75 Gew.-% Aluminiumoxid, ein Zirconiumsilikattrübungsmittel und Filamente, ausgewählt aus Calciummagnesiumsilikatfilamenten, polykristallinen Aluminiumoxidfilamenten, Glasfilamenten und Gemischen davon, wobei die Glasfilamente einen Boroxidgehalt von weniger als 1 Gew.-% und einen kombinierten Natriumoxid- und Kaliumoxidgehalt von weniger als 1 Gew.-% haben.

2. Material nach Anspruch 1, **dadurch gekennzeichnet, dass** das Aluminiumoxid pyrogen ist.

3. Material nach Anspruch 1 oder 2, **dadurch gekennzeichnet, dass** das thermisch isolierende Material Folgendes umfasst:
40 bis 75 Gew.-% Aluminiumoxid,
17,5 bis 60 Gew.-% Trübungsmittel und
0,5 bis 20 Gew.-% Filament.

4. Material nach Anspruch 3, **dadurch gekennzeichnet, dass** das thermisch isolierende Material Folgendes umfasst:
40 bis 70 Gew.-% Aluminiumoxid,
25 bis 50 Gew.-% Trübungsmittel und
1 bis 10 Gew.-% Filament.

5. Material nach Anspruch 4, **dadurch gekennzeichnet, dass** das thermisch isolierende Material Folgendes umfasst:
50 bis 60 Gew.-% Aluminiumoxid,
25 bis 50 Gew.-% Trübungsmittel und
1 bis 10 Gew.-% Filament.

6. Material nach einem der vorherigen Ansprüche, **dadurch gekennzeichnet, dass** die Glasfilamente im Wesentlichen die folgende Zusammensetzung haben:
| | |
|---|---|
| SiO₂ | 64 bis 66 Gew.-% |
| Al₂O₂ | 23 bis 26 Gew.-% |
| B₂O₃ | weniger als 0,1 Gew.-% |
| MgO | 9 bis 11 Gew.-% |
| CaO | 0,1 bis 0,3 Gew.-% |
| Na₂O & K₂O | weniger als 0,3 Gew.-% |
| Fe₂O₃ | weniger als 0,3 Gew.-% |

7. Material nach Anspruch 6, **dadurch gekennzeichnet, dass** die Glasfilamente S-Glasfilamente sind.

8. Material nach einem der vorherigen Ansprüche, **dadurch gekennzeichnet, dass** die polykristallinen Aluminiumoxidfilamente im Wesentlichen die folgende Zusammensetzung haben:
| | |
|---|---|
| SiO₂ | 3 bis 4 Gew.-% |
| Al₂O₃ | 95 bis 96 Gew.-% |
| B₂O₃ | 0,01 bis 0,06 Gew.-% |
| MgO | 0,01 bis 0,03 Gew.-% |
| CaO | 0,02 bis 0,04 Gew.-% |
| Na₂O & K₂O | 0,25 bis 0,35 Gew.-% |
| Fe₂O₃ | 0,02 bis 0,04 Gew.-% |

9. Material nach einem der vorherigen Ansprüche, **dadurch gekennzeichnet, dass** die Calciummagnesiumsilikatfilamente im Wesentlichen die folgende Zusammensetzung haben:
| | |
|---|---|
| SiO₂ | 50 bis 70 Gew.-% |
| Al₂O₃ | 0,05 bis 0,2 Gew.-% |
| B₂O₃ | weniger als 0,07 Gew.-% |
| MgO | 10 bis 20 Gew.-% |
| CaO | 15 bis 25 Gew.-% |
| Na₂O & K₂O | weniger als 0,06 Gew.-% |
| Fe₂O₃ | weniger als 0,1 Gew.-% |

10. Material nach einem der vorherigen Ansprüche, **dadurch gekennzeichnet, dass** das thermisch isolierende Material amorphes Siliziumoxid beinhaltet.

11. Material nach Anspruch 10, **dadurch gekennzeichnet, dass** das amorphe Siliziumoxid pyrogenes Siliziumoxid ist.

12. Material nach Anspruch 10 oder 11, **dadurch gekennzeichnet, dass** das amorphe Siliziumoxid parallel mit dem Aluminiumoxid abgeraucht wird.

13. Material nach einem der Ansprüche 10 bis 12, **dadurch gekennzeichnet, dass** das Gewichtsverhältnis zwischen Siliziumoxid und Aluminiumoxid in einem Bereich von 100 Teilen Aluminiumoxid zu bis zu 50 Teilen Siliziumoxid liegt.

14. Material nach Anspruch 13, **dadurch gekennzeichnet, dass** das Gewichtsverhältnis zwischen Siliziumoxid und Aluminiumoxid in einem Bereich von 100 Teilen Aluminiumoxid zu 50 Teilen Siliziumoxid bis 100 Teile Aluminiumoxid zu 30 Teilen Siliziumoxid liegt.

## Revendications

1. Matériau thermo-isolant microporeux **caractérisé en ce qu'**il comprend 40 à 75 pourcent en poids d'oxyde d'aluminium ; un opacifiant en silicate de zirconium ; et des filaments sélectionnés parmi des filaments de silicate de calcium-magnésium, des filaments d'alumine polycristalline, des filaments de verre et des mélanges de ceux-ci, les filaments de verre présentant une teneur en oxyde de bore inférieure à 1 pourcent en poids et une teneur combinée en oxyde de sodium et oxyde de potassium inférieure à 1 pourcent en poids.

2. Matériau selon la revendication 1, **caractérisé en ce que** l'oxyde d'aluminium est pyrogène.

3. Matériau tel que revendiqué à la revendication 1 ou à la revendication 2, **caractérisé en ce que** le matériau thermo-isolant comprend :
40 à 75 pourcent en poids d'oxyde d'aluminium,
17,5 à 60 pourcent en poids d'un opacifiant, et
0,5 à 20 pourcent en poids d'un filament.

4. Matériau tel que revendiqué à la revendication 3, **caractérisé en ce que** le matériau thermo-isolant comprend :
40 à 70 pourcent en poids d'oxyde d'aluminium,
25 à 50 pourcent en poids d'un opacifiant, et
1 à 10 pourcent en poids d'un filament.

5. Matériau tel que revendiqué à la revendication 4, **caractérisé en ce que** le matériau thermo-isolant comprend :
50 à 60 pourcent en poids d'oxyde d'aluminium,
25 à 50 pourcent en poids d'un opacifiant, et
1 à 10 pourcent en poids d'un filament.

6. Matériau tel que revendiqué dans l'une quelconque des revendications précédentes, **caractérisé en ce que** les filaments de verre présentent sensiblement la composition suivante :
| | |
|---|---|
| SiO₂ | 64 à 66 pourcent en poids |
| Al₂O₃ | 23 à 26 pourcent en poids |
| B₂O₃ | moins de 0,1 pourcent en poids |
| MgO | 9 à 11 pourcent en poids |
| CaO | 0,1 à 0,3 pourcent en poids |
| Na₂O & K₂O | moins de 0,3 pourcent en poids |
| Fe₂O₃ | moins de 0,3 pourcent en poids. |

7. Matériau tel que revendiqué à la revendication 6, **caractérisé en ce que** les filaments de verre sont des filaments de verre S.

8. Matériau tel que revendiqué dans l'une quelconque des revendications précédentes, **caractérisé en ce que** les filaments d'alumine polycristalline présentent sensiblement la composition suivante :
| | |
|---|---|
| SiO₂ | 3 à 4 pourcent en poids |
| Al₂O₃ | 95 à 96 pourcent en poids |
| B₂O₃ | 0,01 à 0,06 pourcent en poids |
| MgO | 0,01 à 0,03 pourcent en poids |
| CaO | 0,02 à 0,04 pourcent en poids |
| Na₂O & K₂O | 0,25 à 0,35 pourcent en poids |
| Fe₂O₃ | 0,02 à 0,04 pourcent en poids. |

9. Matériau tel que revendiqué dans l'une quelconque des revendications précédentes, **caractérisé en ce que** les filaments de silicate de calcium-magnésium présentent sensiblement la composition suivante :
| | |
|---|---|
| SiO₂ | 50 à 70 pourcent en poids |
| Al₂O₃ | 0,05 à 0,2 pourcent en poids |
| B₂O₃ | moins de 0,07 pourcent en poids |
| MgO | 10 à 20 pourcent en poids |
| CaO | 15 à 25 pourcent en poids |
| Na₂O & K₂O | moins de 0,06 pourcent en poids |
| Fe₂O₃ | moins de 0,1 pourcent en poids. |

10. Matériau tel que revendiqué dans l'une quelconque des revendications précédentes, **caractérisé en ce que** le matériau thermo-isolant comprend de l'oxyde de silicium amorphe.

11. Matériau tel que revendiqué à la revendication 10, **caractérisé en ce que** l'oxyde de silicium amorphe est de l'oxyde de silicium pyrogène.

12. Matériau tel que revendiqué à la revendication 10 ou à la revendication 11, **caractérisé en ce que** l'oxyde de silicium amorphe est co-sublimé avec l'oxyde d'aluminium.

13. Matériau tel que revendiqué dans l'une quelconque des revendications 10 à 12, **caractérisé en ce que** le rapport en poids de l'oxyde de silicium sur l'oxyde d'aluminium est dans une gamme de 100 parties d'oxyde d'aluminium pour jusqu'à 50 parties d'oxyde de silicium.

14. Matériau tel que revendiqué à la revendication 13, **caractérisé en ce que** le rapport en poids de l'oxyde de silicium sur l'oxyde d'aluminium est dans une gamme de 100 parties d'oxyde d'aluminium pour 50 parties d'oxyde de silicium, à 100 parties d'oxyde d'aluminium pour 30 parties d'oxyde de silicium.
